# EUROPÄISCHE PATENTANMELDUNG

(11) **EP 2 112 774 A1**
(43) Veröffentlichungstag der Anmeldung: **28.10.2009**
(21) Anmeldenummer: 08154936.2
(22) Anmeldetag: 22.04.2008
(51) Int. Cl.: H04B 10/00, G08C 23/00

(54) **Leistungsregelsystem und Kommunikationsverfahren**

(71) Anmelder: ABB Schweiz AG, 5400 Baden (CH)
(72) Erfinder: Bueckel, Michael, 79540 Lörrach (DE); Bieser, Stefan, D-79771 Klettgau (DE)
(74) Vertreter: ABB Patent Attorneys

(57) **Zusammenfassung**

In einem Leistungsregelsystem (1) wird eine optische Kommunikationsverbindungen (4) für den Austausch von regelungsbezogenen Prozessdaten zwischen einem Leistungselektronikkontroller (2) und jeweils einer von mehreren Leistungselektronikeinheiten (3) verwendet. Dabei wird ein definierter Bandbreitenanteil der optischen Kommunikationsverbindungen (4) als Dienstkanal für den Austausch von nichtregelungsbezogenen Systemdaten zwischen dem Leistungselektronikkontroller (2) und jeweils einer der Leistungselektronikeinheiten (3) vorgesehen. Im Dienstkanal werden die Systemdaten paketweise in definierten, nicht aufeinander folgenden Zeitfenstern über die optischen Kommunikationsverbindungen (4) ausgetauscht. Die für die Dienstkanäle reservierten Zeitfenster ermöglichen die periodische Übermittlung von sich dynamisch ändernden, vorrichtungsspezifischen Zustandswerten und/oder festprogrammierten, einheitsspezifischen Vorrichtungsdaten von den Leistungselektronikeinheiten (3) an den Leistungselektronikkontroller (2), ohne elektromagnetische Störanfälligkeit und ohne separate elektrische Verbindungen. In umgekehrter Richtung können zudem Systemdaten mit Konfigurationsdaten und/oder lauffähigem Programmcode zur Konfiguration, Wartung und/oder Aktualisierung vom Leistungselektronikkontroller (2) in die Leistungselektronikeinheiten (3) geladen werden.

## Beschreibung

### Technisches Gebiet

Die vorliegende Erfindung betrifft ein Leistungsregelsystem und ein dafür geeignetes Kommunikationsverfahren. Die vorliegende Erfindung betrifft insbesondere ein Leistungsregelsystem mit mindestens einem Leistungselektronikkontroller und mehreren steuerbaren Leistungselektronikeinheiten sowie ein Kommunikationsverfahren, wobei optische Kommunikationsverbindungen für den Austausch von regelungsbezogenen Prozessdaten zwischen dem Leistungselektronikkontroller und jeweils einer der Leistungselektronikeinheiten vorgesehen sind.

### Stand der Technik

In Leistungsregelsystemen sind die Leistungselektronikeinheiten (z.B. Power Electronics Controller PEC80 von ABB) mit ihren Leistungshalbleiterkomponenten (z.B. Leistungsdioden oder Leistungsthyristoren) in einer Umgebung angeordnet, die starken elektromagnetischen Feldern ausgesetzt ist. Um störende elektromagnetische Einflüsse zu verhindern, werden optische Kommunikationsverbindungen eingesetzt um steuerungs- und regelungsspezifische Prozessdaten zwischen dem Leistungselektronikkontroller (z.B. ein Power Electronics Controller PEC800 von ABB) und den Leistungselektronikeinheiten auszutauschen.

Für die Wartung und Konfiguration der Leistungselektronikeinheiten, z.B. zum Laden von Konfigurationsparametern, Programmcode und/oder Firmware in feldprogrammierbare Logikgatter (Field Programmable Logic Array, FPGA), wird herkömmlicherweise eine elektrische (Ethernet) Verbindung zu den Leistungselektronikeinheiten erstellt, und die Konfigurationsdaten werden mittels TCP/IP (Transport Control Protocol/Internet Protocol) darüber geladen. Zusätzlich zu den möglichen elektromagnetischen Kompatibilitätsproblemen erweisen sich diese (drahtbasierten) elektrischen Verbindungen als kostspielig, da sie entsprechende separate Anschlüsse und Kommunikationsmodule in den Leistungselektronikeinheiten erfordern, welche die meiste Zeit ungenutzt sind und nur für sporadische Konfigurations- und Wartungszwecke verwendet werden.

### Darstellung der Erfindung

Es ist eine Aufgabe der vorliegenden Erfindung ein Leistungsregelsystem und ein dafür geeignetes Kommunikationsverfahren vorzuschlagen, welche mindestens einige der Nachteile des Stands der Technik nicht aufweisen. Es ist insbesondere eine Aufgabe der vorliegenden Erfindung ein Leistungsregelsystem und ein dafür geeignetes Kommunikationsverfahren vorzuschlagen, welche für Konfigurations- und Wartungszwecke ein sporadisches und dynamisches Laden von Konfigurationsdaten und/oder aktualisierten Programmen ermöglichen, ohne dass dazu spezielle elektrische Verbindungen vorgesehen und bereitgestellt werden müssen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

In einem Leistungsregelsystem, welches mindestens einen Leistungselektronikkontroller und mehrere steuerbare Leistungselektronikeinheiten umfasst, werden die oben genannten Ziele durch die vorliegende Erfindung insbesondere dadurch erreicht, dass ein definierter Bandbreitenanteil von optischen Kommunikationsverbindungen, die für den Austausch von regelungsbezogenen Prozessdaten zwischen dem Leistungselektronikkontroller und den Leistungselektronikeinheiten vorgesehen sind, für den Austausch von nichtregelungsbezogenen Systemdaten zwischen dem Leistungselektronikkontroller und jeweils einer der Leistungselektronikeinheiten vorgesehen wird. Zu diesem Zweck umfassen der Leistungselektronikkontroller und die Leistungselektronikeinheiten beispielsweise jeweils ein Kommunikationsmodul für die Steuerung der Datenkommunikation über die optischen Kommunikationsverbindungen, welches eingerichtet ist, die Systemdaten paketweise in definierten (nicht aufeinander folgenden) Zeitfenstern, Zeitintervallen oder Zeitzyklen über die optischen Kommunikationsverbindungen zu übermitteln respektive zu empfangen. In den Systemdaten können somit sich dynamisch ändernde, vorrichtungsspezifische Zustandswerte und/oder festprogrammierte, einheitsspezifische Vorrichtungsdaten von den Leistungselektronikeinheiten periodisch an den Leistungselektronikkontroller übermittelt werden, ohne elektromagnetische Störanfälligkeit und ohne dafür separate elektrische Verbindungen bereitstellen zu müssen. Mit den gleichen Vorteilen können zudem in umgekehrter Richtung Systemdaten mit Konfigurationsdaten und/oder lauffähigem Programmcode zur Konfiguration, Wartung und/oder Aktualisierung vom Leistungselektronikkontroller in die Leistungselektronikeinheiten geladen und dort gespeichert werden.

Vorzugsweise umfasst der Leistungselektronikkontroller ein Adressierungsmodul, welches eingerichtet ist, basierend auf der Netzwerkadresse des Leistungselektronikkontrollers für die Leistungselektronikeinheiten jeweils eine zugeordnete Netzwerkadresse für die Adressierung über die optischen Kommunikationsverbindungen zu generieren.

Vorzugsweise umfasst der Leistungselektronikkontroller zudem ein Routermodul, welches eingerichtet ist, über ein Kommunikationsnetzwerk empfangene Datenpakete basierend auf einer dem Datenpaket zugeordneten Netzwerkadresse über die optische Kommunikationsverbindung an die der Netzwerkadresse zugeordnete Leistungselektronikeinheit weiterzuleiten.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
- Figur 1: zeigt ein Blockdiagramm, welches schematisch ein Leistungsregelsystem mit einem Leistungselektronikkontroller und mehreren Leistungselektronik- einheiten darstellt, welche über optische Kommunikationsverbindungen miteinander verbunden sind.
- Figur 2: zeigt ein Zeitdiagramm, das schematisch ein Beispiel einer Definition von Zeitfenstern für die Übertragung von nichtregelungsspezifischen Systemda- ten über eine der optischen Kommunikationsverbindungen darstellt.

### Wege zur Ausführung der Erfindung

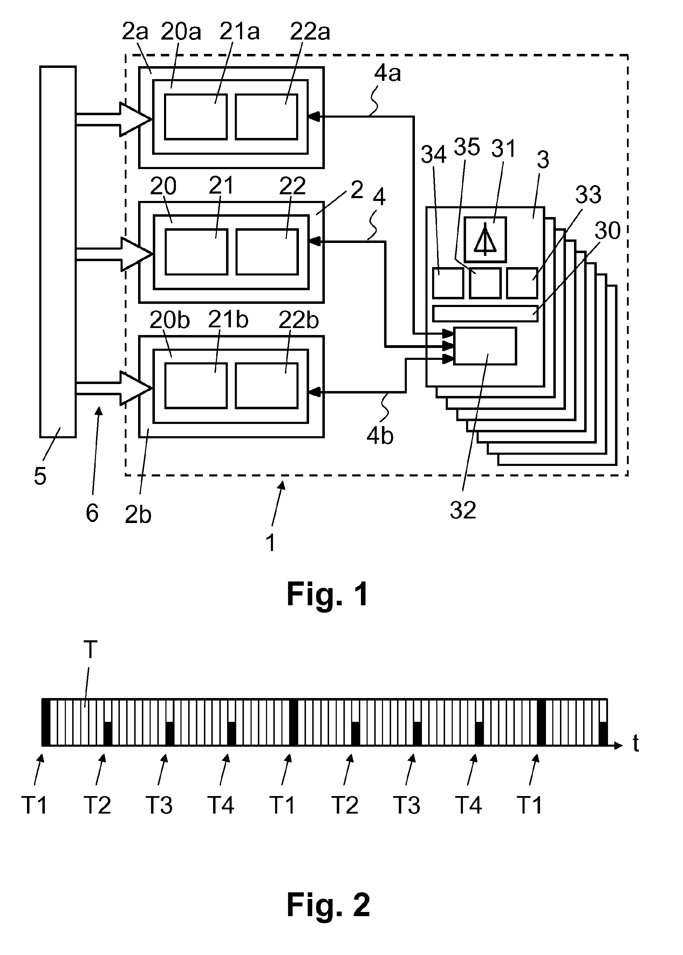

In der Figur 1 bezeichnet das Bezugszeichen 1 ein Leistungsregelsystem, beispielsweise ein Leistungsregelsystem für die Regelung elektrischer Leistung in Kraftwerken für die Erzeugung elektrischer Energie, bei Erregersystemen oder bei der Energieverteilung. Das Leistungsregelsystem 1 umfasst mehrere Leistungselektronikkontroller 2, 2a, 2b, z.B. ein oder mehrere Power Electronics Controller PEC800 von ABB, und mehrere steuerbare Leistungselektronikeinheiten 3, z.B. Power Electronics Controllers PEC80 von ABB. Die Leistungselektronikkontroller 2, 2a, 2b sind jeweils über eine optische Kommunikationsverbindung 4, 4a, 4b mit jeweils einer der Leistungselektronikeinheiten 3 verbunden. Zum Beispiel sind bei einer Ausführung mit acht Leistungselektronikeinheiten 3 pro Leistungselektronikkontroller 2, 2a, 2b entsprechend acht optische Kommunikationsverbindungen 4, 4a, 4b zwischen einem Kommunikationsmodul 20, 20a, 20b des Leistungselektronikkontrollers 2, 2a, 2b und den Kommunikationsmodulen 32 der Leistungselektronikeinheiten 3 vorgesehen.

Die Leistungselektronikkontroller 2, 2a, 2b sind mit Regelungsmodulen ausgestattet zur Erzeugung und Übermittlung von Prozessdaten für die Regelung und Steuerung der Leistungselektronikeinheiten 3 über die optischen Kommunikationsverbindungen 4, 4a, 4b. Die Leistungselektronikkontroller 2a, 2b sind beispielsweise als redundante Backup-Systeme zum Leistungselektronikkontroller 2 ausgeführt.

Die Leistungselektronikeinheiten 3 umfassen jeweils einen Leistungselektronikwandler 30 zur Ansteuerung von Leistungshalbleiterkomponenten 31, z.B. Leistungsdioden oder Leistungsthyristoren, basierend auf den empfangenen Prozessdaten. Die Leistungselektronikeinheiten 3 umfassen zudem einen Zustandsspeicher 33 mit dynamisch ändernden vorrichtungsspezifischen Zustandswerten, einen Datenspeicher 34 mit festprogrammierten einheitsspezifischen Vorrichtungsdaten, z.B. ein feldprogrammierbares Logikgatter (FPGA), sowie einen dynamisch programmierbaren Programmspeicher 35 (z.B., ein SDRAM) zur Speicherung von Konfigurationsdaten und/oder lauffähigem Programmcode. Die Vorrichtungsdaten umfassen Metadaten, beispielsweise eine Vorrichtungsidentifizierung, eine Vorrichtungstypennummer, einen Vorrichtungsrevisionsstand, eine Vorrichtungsseriennummer, eine Kommunikationseinheitsidentifizierung, eine Kommunikationseinheitstypennummer, einen Kommunikationseinheitsrevisionsstand und/oder eine Kommunikationseinheitsseriennummer.

Der mit dem Bezugszeichen 5 versehene Block repräsentiert diverse externe Systeme und/oder Module, die über ein Kommunikationsnetzwerk 6 und/oder separate Kommunikationsverbindungen mit den Leistungselektronikkontrollern 2, 2a, 2b verbunden sind. Das Kommunikationsnetzwerk 6 umfasst beispielsweise ein elektrisches Ethernet, über welches die Datenkommunikation mittels TCP/IP erfolgt. Der Block 5 umfasst beispielsweise Messsysteme welche unterschiedliche Variablen von Transformatoren, Generatoren und/oder Stromnetzleitungen messen und die entsprechenden Messwerte an die Leistungselektronikkontroller 2, 2a, 2b leiten. Der Block 5 umfasst beispielsweise auch Bedien- und Überwachungsstationen über welche Benutzer Steuer-, Wartungs-, Programmier- und Konfigurationsbefehle an das Leistungsregelsystem 1 übermitteln respektive Konfigurations-, Mess- und Statuswerte des Leistungsregelsystems 1 beziehen und überwachen können.

Die Kommunikationsmodule 20, 20a, 20b des Leistungselektronikkontrollers 2, 2a, 2b und die Kommunikationsmodule 32 der Leistungselektronikeinheiten 3 sind eingerichtet über die optischen Kommunikationsverbindungen 4, 4a, 4b jeweils einen Dienstkanal für den Austausch von nichtregelungsbezogenen Systemdaten zwischen dem Leistungselektronikkontroller 2, 2a, 2b und jeweils einer der Leistungselektronikeinheiten 3 zu erstellen. Für diese Dienstkanäle ist auf den optischen Kommunikationsverbindungen 4, 4a, 4b jeweils ein definierter Teil der Bandbreite reserviert. Der für die Dienstkanäle reservierte Anteil beträgt beispielsweise 2.5% bis 10% der verfügbaren Bandbreite der optischen Kommunikationsverbindungen 4, 4a, 4b, was beispielsweise einen Datendurchsatz von 20KB/s bis 80KB/s ermöglicht. Die Figur 2 illustriert auf einer Zeitachse t eine Sequenz von Zeitfenstern T in welchen Datenpakete über die optischen Kommunikationsverbindungen 4, 4a, 4b übertragen werden. Bestimmte (nicht aufeinander folgende) dieser Zeitfenster, vorzugsweise zu definierten Zeitzyklen respektive Zeitintervallen, werden für die Dienstkanäle, d.h. für die Übertragung der nichtregelungsbezogenen Systemdaten reserviert. Wenn beispielsweise jedes sechzehnte Datenwort (z.B. Zeitfenster T1 und T3) mit einer Zykluszeit von 100µs verwendet wird, kann für die Dienstkanäle jeweils ein Datendurchsatz von 20KB/s erreicht werden; jedes achte Datenwort (z.B. Zeitfenster T1, T2, T3 und T4) mit einer Zykluszeit von 25µs ergibt beispielsweise einen Datendurchsatz von 80KB/s für die Dienstkanäle.

Von den für die Dienstkanäle vorgesehenen Zeitfenstern, z.B. T1, T2, T3, T4, können definierte (nicht aufeinander folgende) Zeitfenster für unterschiedliche Zwecke definiert sein. Beispielsweise ist ein bestimmtes Zeitfenster T1 (Zeitintervall, Zykluszeit) reserviert für die Übermittlung der dynamisch ändernden vorrichtungsspezifischen Zustandswerte und/oder der festprogrammierten einheitsspezifischen Vorrichtungsdaten von den Leistungselektronikeinheiten 3 an den Leistungselektronikkontroller 2, 2a, 2b. Zu diesem Zweck übertragen die Kommunikationsmodule 32 die entsprechenden Inhalte des Zustandsspeichers 33 respektive des Datenspeichers 34 paketweise jeweils sequentiell, über mehrere der dafür bestimmten Zeitfenster T1 verteilt, an die Kommunikationsmodule 20, 20a, 20b, wo die Zustandswerte und/oder Vorrichtungsdaten entgegengenommen und gesammelt werden, und jeweils periodisch in einem Aktualisierungsintervall von beispielsweise einigen Minuten, z.B. drei bis sieben Minuten, im Leistungselektronikkontroller 2, 2a, 2b aktualisiert vorliegen. Die anderen respektive verbleibenden für die Dienstkanäle reservierten (nicht aufeinander folgenden) Zeitfenster, z.B. T2, T3, T4, können für die Übermittlung von Konfigurationsdaten und/oder lauffähigem Programmcode vom Leistungselektronikkontroller 2, 2a, 2b an die Leistungselektronikeinheiten 3 vorgesehen werden. Zu diesem Zweck übertragen die Kommunikationsmodule 20, 20a, 20b neue Konfigurationsdaten und/oder lauffähigen Programmcode paketweise, jeweils sequentiell über mehrere der dafür bestimmten Zeitfenster T2, T3, T4 verteilt, an die Kommunikationsmodule 32, wo die Daten entgegengenommen, gesammelt und, z.B. beim vollständigen Vorliegen, in den programmierbaren Programmspeicher 35 geschrieben werden.

Die Leistungselektronikkontroller 2, 2a, 2b umfassen jeweils ein Adressierungsmodul 21, 21 a, 21 b und ein Routermodul 22, 22a, 22b, welche vorzugsweise als programmierte Softwaremodule ausgeführt sind und einen Prozessor des Leistungselektronikkontrollers 2, 2a, 2b steuern. Der Fachmann wird verstehen, dass das Adressierungsmodul 21, 21 a, 21 b und/oder das Routermodul 22, 22a, 22b auch teilweise oder vollständig als Hardwarekomponenten ausgeführt werden können.

Das Kommunikationsmodul 20 des Leistungselektronikkontrollers 2 ist als Master-Kontroller aufgesetzt. Das Adressierungsmodul 21, 21 a, 21 b ist eingerichtet, beim Aufstarten des Leistungsregelsystems 1 die Information der verfügbaren, über die optischen Kommunikationsverbindungen 4, 4a, 4b eingerichteten Dienstkanäle aus dem FPGA zu lesen. Das Adressierungsmodul 21 des Master-Kontrollers definiert automatisch sämtliche TCP/IP Konfigurationsparameter für die Dienstkanäle über die optischen Kommunikationsverbindungen 4, 4a, 4b zu den Leistungselektronikeinheiten 3. Insbesondere werden die TCP/IP Adressen der Kommunikationsmodule 32 (Subkontroller) der Leistungselektronikeinheiten 3 dem selben TCP/IP-Subnetz zugeordnet wie die TCP/IP-Konfiguration des Master-Kontrollers im elektrischen Kommunikationsnetzwerk 6, wodurch die Kommunikationsmodule 32 im Subnetz "sichtbar" sind. Die TCP/IP Adressen für die Dienstkanäle über die optischen Kommunikationsverbindungen 4, 4a, 4b werden basierend auf der elektrischen TCP/IP Adresse der TCP/IP-Konfiguration des Master-Kontrollers und einer Nummer des Dienstkanals respektive der dazu verwendeten optischen Kommunikationsverbindung 4, 4a, 4b erzeugt. Für jeden Dienstkanal werden zwei TCP/IP Adressen erzeugt, eine für den Master und eine für den Slave. Die TCP/IP Adresse für den ersten Dienstkanal Master ergibt sich beispielsweise aus der elektrischen TCP/IP Adresse des Master-Kontrollers plus einem Offset (z.B. die Nummer des Dienstkanals oder der optischen Kommunikationsverbindung 4, 4a, 4b) plus dem Wert eins; und die TCP/IP Adresse für den ersten Dienstkanal Slave ergibt sich in entsprechender Weise aus der elektrischen TCP/IP Adresse des Master-Kontrollers plus dem Offset plus dem Wert zwei.

Das Routermodul 22 des Master-Kontrollers ist eingerichtet, das Routing (Wegleitung von Datenpaketen) für das durch die Dienstkanäle gebildeten Dienstkanal-Netzwerks durchzuführen. Das Routermodul 22 ist insbesondere eingerichtet, entsprechend der für die Dienstkanäle erzeugten TCP/IP Adressen automatisch eine Routing-Tabelle zu erstellen. Basierend auf der Routing-Tabelle, leitet das Routermodul 22 beispielsweise Datenpakete, die vom Block 5 über das Kommunikationsnetzwerk 6 empfangen wurden, über den Dienstkanal einer der optischen Kommunikationsverbindungen 4, 4a, 4b an die gewünschte Leistungselektronikeinheit 3.

## Patentansprüche

1. Leistungsregelsystem (1), umfassend:
mindestens ein Leistungselektronikkontroller (2),
mehrere steuerbare Leistungselektronikeinheiten (3), und optische Kommunikationsverbindungen (4) für den Austausch von regelungsbezogenen Prozessdaten zwischen dem Leistungselektronikkontroller (2) und jeweils einer der Leistungselektronikeinheiten (3),
**dadurch gekennzeichnet,**
**dass** ein definierter Bandbreitenanteil der optischen Kommunikationsverbindungen (4) für den Austausch von nichtregelungsbezogenen Systemdaten zwischen dem Leistungselektronikkontroller (2) und jeweils einer der Leistungselektronikeinheiten (3) vorgesehen ist.

2. Leistungsregelsystem (1) nach Anspruch 1, **dadurch gekennzeichnet, dass** der Leistungselektronikkontroller (2) und die Leistungselektronikeinheiten (3) jeweils ein Kommunikationsmodul (20, 32) für die Steuerung der Datenkommunikation über die optischen Kommunikationsverbindungen (4) umfassen, wobei das Kommunikationsmodul (20, 32) eingerichtet ist, die Systemdaten paketweise in definierten Zeitfenstern (T1, T2, T3, T4) über die optischen Kommunikationsverbindungen (4) zu übermitteln respektive zu empfangen.

3. Leistungsregelsystem (1) nach einem der Ansprüche 1 oder 2, **dadurch gekennzeichnet, dass** die Leistungselektronikeinheiten (3) Zustandsspeicher (33) mit dynamisch ändernden vorrichtungsspezifischen Zustandswerten umfassen, und dass die Leistungselektronikeinheiten (3) eingerichtet sind, die Zustandswerte periodisch als Systemdaten über die optische Kommunikationsverbindungen (4) an den Leistungselektronikkontroller (2) zu übertragen.

4. Leistungsregelsystem (1) nach einem der Ansprüche 1 bis 3, **dadurch gekennzeichnet, dass** die Leistungselektronikeinheiten (3) jeweils einen Datenspeicher (34) mit festprogrammierten einheitsspezifischen Vorrichtungsdaten umfassen, und dass die Leistungselektronikeinheiten (3) eingerichtet sind, die Vorrichtungsdaten periodisch als Systemdaten über die optische Kommunikationsverbindungen (4) an den Leistungselektronikkontroller (2) zu übertragen.

5. Leistungsregelsystem (1) nach Anspruch 4, **dadurch gekennzeichnet, dass** die Vorrichtungsdaten mindestens eines umfassen aus Vorrichtungsidentifizierung, Vorrichtungstypennummer, Vorrichtungsrevisionsstand, Vorrichtungsseriennummer, Kommunikationseinheitsidentifizierung, Kommunikationseinheitstypennummer, Kommunikationseinheitsrevisionsstand und Kommunikationseinheitsseriennummer.

6. Leistungsregelsystem (1) nach einem der Ansprüche 4 oder 5, **dadurch gekennzeichnet, dass** der Datenspeicher (34) als feldprogrammierbares Logikgatter ausgeführt ist.

7. Leistungsregelsystem (1) nach einem der Ansprüche 1 bis 6, **dadurch gekennzeichnet, dass** die Leistungselektronikeinheiten (3) jeweils einen dynamisch programmierbaren Programmspeicher (35) umfassen, und dass die Leistungselektronikeinheiten (3) eingerichtet sind, vom Leistungselektronikkontroller (2) Konfigurationsdaten und/oder lauffähigen Programmcode als Systemdaten über die optischen Kommunikationsverbindungen (4) zu empfangen und im Programmspeicher (35) zu speichern.

8. Leistungsregelsystem (1) nach einem der Ansprüche 1 bis 7, **dadurch gekennzeichnet, dass** der Leistungselektronikkontroller (2) ein Adressierungsmodul (21) umfasst, welches eingerichtet ist, basierend auf der Netzwerkadresse des Leistungselektronikkontrollers (2) für die Leistungselektronikeinheiten (3) jeweils eine zugeordnete Netzwerkadresse für die Adressierung über die optische Kommunikationsverbindungen (4) zu generieren.

9. Leistungsregelsystem (1) nach einem der Ansprüche 1 bis 8, **dadurch gekennzeichnet, dass** der Leistungselektronikkontroller (2) ein Routermodul (22) umfasst, welches eingerichtet ist, über ein Kommunikationsnetzwerk (6) empfangene Datenpakete basierend auf einer dem Datenpaket zugeordneten Netzwerkadresse über die optische Kommunikationsverbindung (4) an die der Netzwerkadresse zugeordnete Leistungselektronikeinheit (3) weiterzuleiten.

10. Leistungsregelsystem (1) nach einem der Ansprüche 1 bis 9, **dadurch gekennzeichnet, dass** der Leistungselektronikkontroller (2) eingerichtet ist, über die optischen Kommunikationsverbindungen (4) Master/Slave-Verbindungen mit jeweils einer der Leistungselektronikeinheiten (3) zu erstellen, wobei der Leistungselektronikkontroller (2) als Master und die Leistungselektronikeinheiten (3) jeweils als Slaves aufgesetzt werden.

11. Leistungsregelsystem (1) nach einem der Ansprüche 1 bis 10, **dadurch gekennzeichnet, dass** der Leistungselektronikkontroller (2) und die Leistungselektronikeinheiten (3) eingerichtet sind, mittels TCP/IP über die optischen Kommunikationsverbindungen (4) zu kommunizieren.

12. Leistungsregelsystem (1) nach einem der Ansprüche 1 bis 11, **dadurch gekennzeichnet, dass** die Leistungselektronikeinheiten (3) jeweils einen Leistungselektronikwandler (30) zur Ansteuerung von Leistungshalbleiterkomponenten (31) basierend auf über die optischen Kommunikationsverbindungen (4) empfangenen Prozessdaten umfassen.

13. Verfahren für eine Datenkommunikation zwischen mindestens einem Leistungselektronikkontroller (2) und mehreren steuerbaren Leistungselektronikeinheiten (3), wobei eine optische Kommunikationsverbindungen (4) für den Austausch von regelungsbezogenen Prozessdaten zwischen dem Leistungselektronikkontroller (2) und jeweils einer der Leistungselektronikeinheiten (3) verwendet wird, **dadurch gekennzeichnet, dass** ein definierter Bandbreitenanteil der optischen Kommunikationsverbindungen (4) für den Austausch von nichtregelungsbezogenen Systemdaten zwischen dem Leistungselektronikkontroller (2) und jeweils einer der Leistungselektronikeinheiten (3) vorgesehen wird.

14. Verfahren nach Anspruch 13, **dadurch gekennzeichnet, dass** die Systemdaten paketweise in definierten Zeitfenstern (T1, T2, T3, T4) über die optischen Kommunikationsverbindungen (4) ausgetauscht werden.
